# EUROPEAN PATENT SPECIFICATION

(11) **EP 0 365 033 B1**
(45) Date of publication and mention of the grant of the patent: **20.04.1994**
(21) Application number: 89119527.3
(22) Date of filing: 20.10.1989
(51) Int. Cl.: F16H 61/28

(54) **Hydraulic actuator unit designed to control gear selection and engaging operations in a mechanical gearbox for motor vehicles**
Hydraulische Betätigungsvorrichtung, bestimmt für die Steuerung der Gangwahl-und Gangschaltvorgänge eines mechanischen Getriebes für Kraftfahrzeuge
Unité hydraulique de commande destinée à la commande des opérations de sélection et d'enclenchement des rapports dans une boîte de vitesses pour véhicules à moteur

(30) Priority: 21.10.1988 IT 6794688
(43) Date of publication of application: 25.04.1990
(73) Proprietor: IVECO FIAT S.p.A., 10156 Torino (IT)
(72) Inventor: Lupo, Giorgio, 10040 Rivalta (IT); Pregnolato, Gian Luigi, 10024 Moncalieri (IT); Montuschi, Mario, 10135 Torino (IT); Pigozzi, Gian Maria, 25100 Brescia (IT)
(74) Representative: Jorio, Paolo

(56) References cited:
- FR-A- 2 138 135
- US-A- 2 106 608

## Description

The present invention relates to a hydraulic actuator unit designed to control gear selection and engaging operations in a mechanical gearbox for motor vehicles.

Gearboxes in which the gear engaging operations are performed automatically, by means of actuators the purpose of which is to perform both gear selection and engaging operations, are already well known. Normally, in a mechanical gearbox, to select a gear, it is necessary to drive a specific gearbox element along a first axis, while to engage the gear, it is necessary to move said element into other positions along a second axis perpendicular to the first. This element must be moved into a plurality of specifically defined positions along said axes by means of specially designed actuators: a first actuator is normally used for controlling motion along the first axis and a second actuator for controlling motion along the second axis. Said actuators are normally driven by a mechanical, hydraulic or pneumatic device and are controlled by specially designed activating means.

A hydraulic actuator of this type is described in FR-A-2138135. This unit comprises a control element adapted to assume a plurality of positions along a first axis, each of said positions corresponding to the selection of a gear, and into a plurality of angular positions along planes perpendicular to said axis, each of said positions corresponding to the engaging of a gear or the neutral position. This unit further comprises a first bar which moves along said first axis, rotates about it and to which said element is fixed and a second bar which moves along a second axis perpendicular to said first axis; said second bar is equipped with a section of a rack and said control element is equipped with a gear wheel sector which engages with said rack so as to drive, by translating said second bar along its respective axis, the rotation of said element on said planes.

Known hydraulic actuator units have many drawbacks.

First of all, they comprise a plurality of components such as hydraulic cylinders, valves and travel regulating elements and therefore have a complex design and a high construction cost. Furthermore, there is a considerable delay between the activation of these devices and the actual execution of the operation they are designed to perform, due to the length of the connections between the various components and the considerable flow resistance resulting from unfavourable fluid dynamic conditions.

In certain cases, the gearbox element driven by said devices is not moved with precision into the positions along said axes or is not held in these positions by the actuators.

Finally, said devices are unable to apply variable forces to the gearbox element, according to a predetermined law, during motion along the axes, so as to adapt to the particular operating conditions of the vehicle and thus simulate the gear selection and engaging manoeuvres performed by the driver of the vehicle.

It is the object of the present invention to provide a hydraulic actuator unit designed to control gear selection and engaging operations in a mechanical gearbox for motor vehicles, which obviates said drawbacks. According to the present invention there is provided a hydraulic actuator unit designed to control gear selection and engaging operations in a mechanical gearbox for motor vehicles, said unit comprising:
- a control element adapted to assume four positions (a,b,c,d) along a first axis (S-S), each of said positions corresponding to the selection of a gear, and into three angular positions (e,f,g) along planes perpendicular to said axis, each of said angular positions corresponding to the engaging of a gear or the neutral position;
- a first bar which moves along said first axis, rotates about it and to which said element is fixed;
- a second bar which moves along a second axis (i-i) perpendicular to said first axis, said second bar being equipped with a section of a rack and said control element being equipped with a gear wheel sector which engages with said rack so as to drive, by translating said second bar along its respective axis, the rotation of said element on said planes;
- hydraulic thrust means for said first and second bars, in which a fluid exerts a force on both ends of each bar so as to drive it along said two perpendicular axes; characterized in that it comprises:
   a first and a second piston, each of which has the form of a beaker having a bottom wall and is free to move along an axis between two shoulders inside a chamber in line with one end of the second bar and has a first axial borehole in which the corresponding end of the second bar is housed in a mobile and fluid-tight fashion and a second borehole passing through said bottom wall;
   a couple of shoulders, each of which is obtained by means of the bottom wall of said beaker and is adapted to halt a corresponding end of the second bar;
   valve means adapted to supply a pressurized fluid to each of the two chambers and discharge it from them, so that when the fluid is supplied to both of the chambers, said bottom walls of the beaker are in contact with the corresponding pistons and said second bar is set in a first central position and when said fluid is supplied to one of said chambers and discharged from the other, the end of a piston goes away from the bottom wall of the corresponding beaker, while the end of the other piston remains in contact with the bottom wall of the corresponding beaker and this goes in contact with one of said shoulders, moving said bar into one of the two lateral positions with respect to the central position;
- a third and a fourth piston, each of which has the form of a beaker having a bottom wall, is free to move along an axis between two shoulders inside a chamber in line with one end of the first bar, and has a first axial borehole in which the corresponding end of the first bar is housed in a mobile fluid-tight fashion and a second borehole passing through said bottom wall;
   a couple of shoulders, each of which is obtained by means of the bottom wall of said beaker and is adapted to halt a corresponding end of the first bar;
   a fifth piston which has the form of a beaker and moves inside a third chamber which is coaxial with said chambers between two shoulders and set so as to house one of said third or fourth piston and to create with its bottom wall one of said shoulders;
   and valve means adapted to supply a pressurized fluid to each of said chambers and to discharge it from them.

The invention will be described by way of example with reference to the accompanying drawings in which:

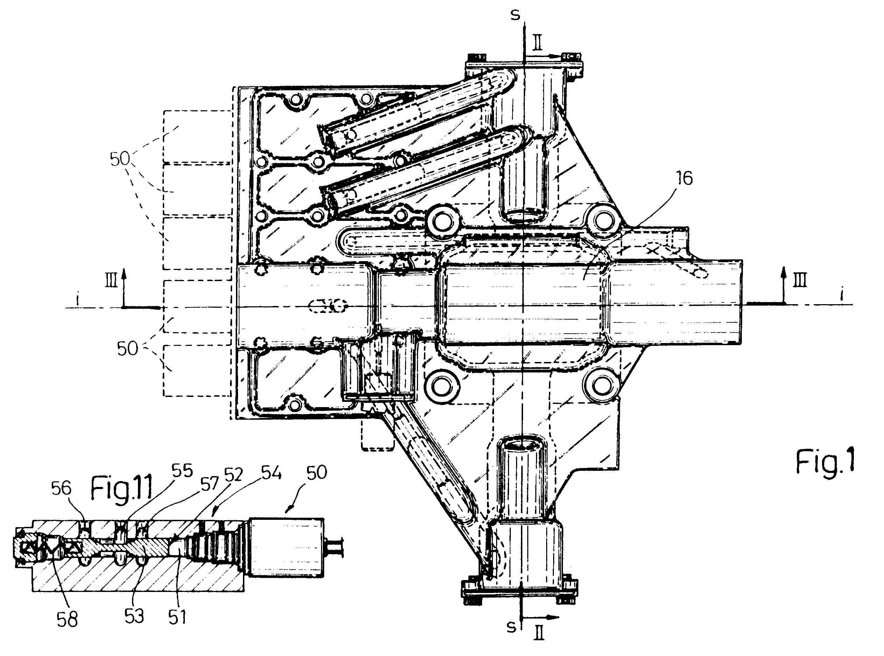

FIGURE 1 is a horizontal section of the actuator unit in accordance with the invention;
FIGURE 2 is a sectional view of this unit taken along line II-II;
FIGURE 3 is another sectional view, taken along line III-III;
FIGURE 4 to 7 show four positions into which certain unit components move during the gear selection operations;
FIGURE 8 to 10 show three positions into which certain unit components move during the gear engaging operations;
FIGURE 11 is a sectional view of the unit valve means.

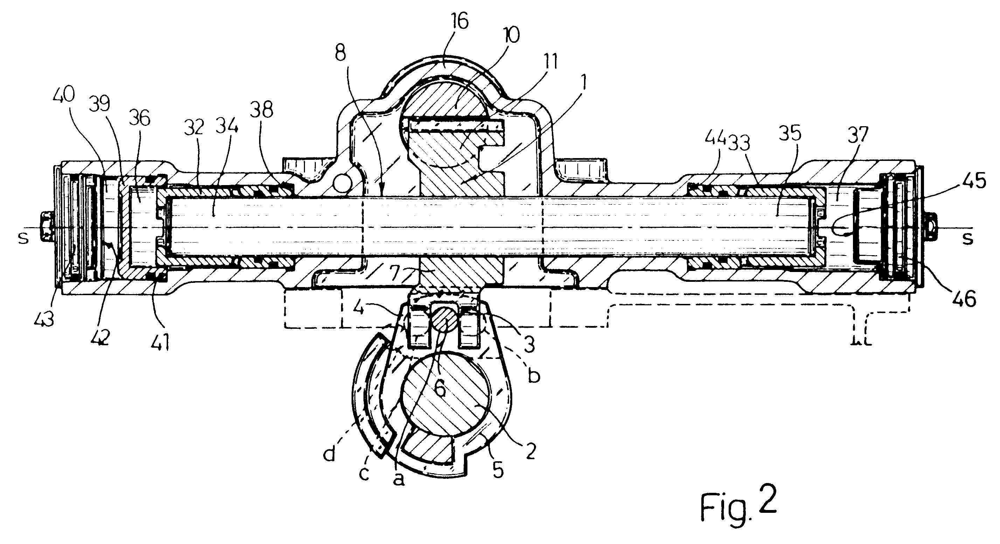

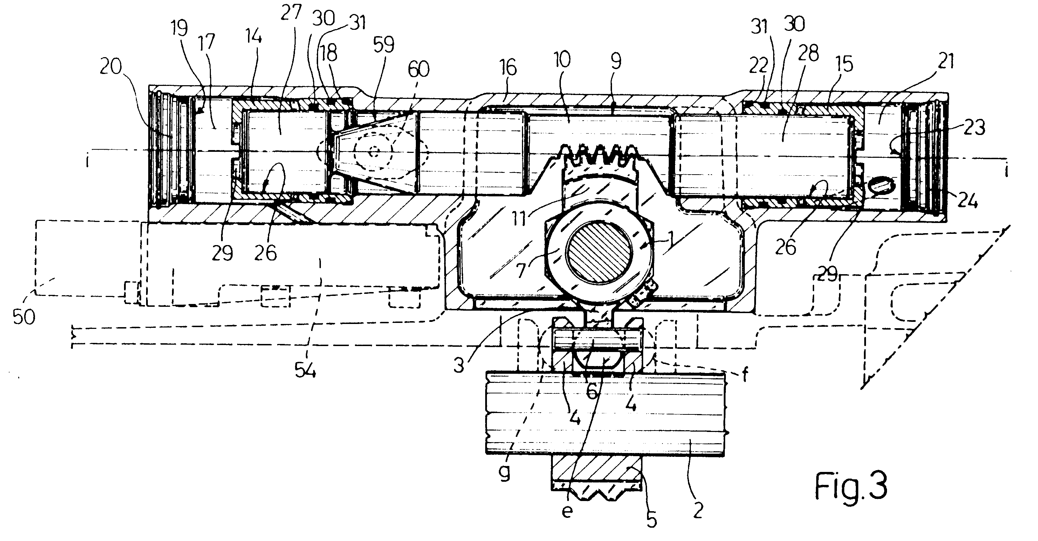

The actuator unit is equipped with a control element 1 specifically designed to control gear selection and engaging operations. The gearbox to which the actuator unit in accordance with the invention has been fitted is of the type in which these operations may be performed by means of a rod 2, which may rotate about its respective axis so as to select a predetermined gear and may be moved along the axis so as to engage the gear. To this aim, control element 1 of the unit constituting the invention comprises a fork 3 whose prongs fit between a couple of tabs 4 fixed to a drive collar 5 connected to rod 2, as can clearly be seen from FIGURES 2 and 3; a pin 6 is fitted between the prongs of fork 3.

Control element 1 is equipped with a hub 7 fixed to a first rod or bar 8 which is free to move longitudinally along its respective axis, indicated as S-S, and to rotate about said axis. This rod is adapted to assume, as described later on, four positions along axis S-S, each of said positions corresponding to an angular position of rod 2 and thus a predetermined position for selecting a gear or group of gears: the four selection positions, indicated by letters a, b, c and d may be clearly seen in FIGURE 2.

The unit also comprises a second rod or bar 9 (FIGURE 3), which moves longitudinally along its respective axis indicated as i-i; in the central part of said rod there is a section of a rack 10 which engages with a corresponding gear wheel sector 11 which is fixed to control element 1 and projects from hub 7 on the opposite side to the side from which fork 3 projects. Rod 9 is adapted to assume, as described later on, three positions along axis i-i each of said positions corresponding to an angular position of control element 1 and thus of collar 5; the three positions assumed by collar 5 following said rotation are indicated by letters e, f and g.

The unit comprises hydraulic thrust means for rods 8 and 9 adapted to exert forces, by means of a hydraulic fluid, on both ends of each rod to drive them along the two axes, S-S and i-i.

The thrust means of rod 9 comprise substantially a couple of pistons 14 and 15, each of which moves along an axis between a couple of shoulders inside a corresponding chamber machined into body 16 of the unit. Piston 14, which has the form of a beaker, moves inside a chamber 17 between a shoulder 18 machined into body 16 and a shoulder 19 with an end cover 20; the other piston 15, which also has the form of a beaker, moves along an axis in a chamber 21 between a shoulder 22 machined into body 16 and a shoulder 23 with an end cover 24.

Within the cylindrical surface 26 of each of pistons 14 and 15 slides a corresponding end, respectively 27 and 28, of rod 9; furthermore, each of said pistons has, on its rear wall, a borehole 29 for linking chambers 17 and 21 with the front surface of ends 27 and 28 of rod 9. Furthermore, retaining rings 30 and 31 are set, respectively, between ends 27 and 28 of the rod and surfaces 26 of pistons 14 and 15 and between the outer surfaces of said pistons and the inner surfaces of chambers 17 and 21.

The thrust means of rod 8, shown in FIGURE 2 also comprise a couple of beaker-shaped pistons 32 and 33 in which ends 34 and 35 of the rod slide. These pistons slide inside chambers 36 and 37 machined into body 16, and piston 32 moves between a shoulder 38 of body 16 and a further piston 39, which moves along an axis inside a chamber 40, between a shoulder 41 of the body and a shoulder 42 with an end cover 43.

Piston 33 moves between a shoulder 44 of body 16 and a shoulder 45 with an end cover 46.

The unit in accordance with the invention also comprises valve means 50 and 54, of a known type, which substantially comprise a plurality of valves, each of which is adapted to control the flow of hydraulic fluid into and out of each of chambers 17 and 21, 36, 37 and 40; each of these valves, preferably driven by an electrical device, is set so as to vary, according to a predetermined law, the pressure of said fluid inside the chambers, during the motion of rods 8 and 9, which will be described later, so as to intentionally apply variable forces to the rods during the axial movement of said rods.

Each of these valves may have a structure similar to the one shown in FIGURE 11 and comprise an electrically driven pressure control valve 50, adapted to control the pressure of a hydraulic fluid inside a hollow 51 opposite the front surface 52 of an intercepting element 53 of a second flow control valve 54. This intercepting element is adapted to link a pipe 55, which is connected to one of said chambers, with a fluid supply pipe 56 and a discharge pipe 57. The intercepting element 53 is held in position by the force applied to the surface 52 by the pressure of the fluid in chamber 51 and the force exerted by a helical spring 58. Rod 9 comprises a conical section 59 adapted to activate a detector 60 preset to emit a signal to indicate the movement of said rod.

The actuator unit described above operates in the following way.

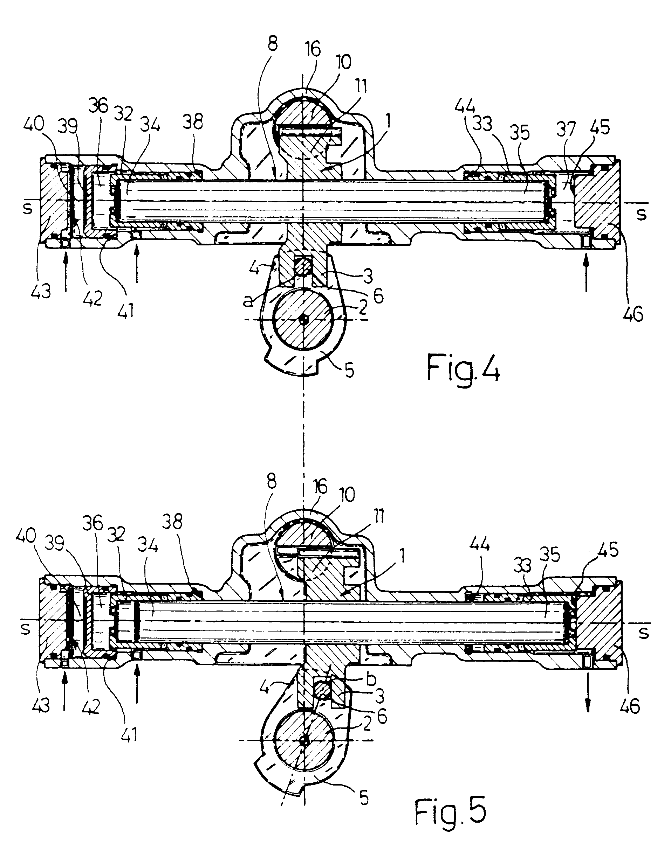

To select one of the gears which corresponds to one of the positions of the control element 1 indicated by letters a, b, c and d in FIGURE 2, the valve means set forth above are activated so as to supply hydraulic fluid to chambers 36, 37 and 40 or discharge it from them, according to one of the four configurations shown in FIGURES 4 to 7. In fact, if hydraulic fluid is supplied to all three chambers, pistons 32, 33 and 39 assume the configuration shown in FIGURE 4, in which pistons 32 and 33 are brought into contact with corresponding shoulders 38 and 44 by the force exerted by the pressurized fluid inside chambers 36 and 37; piston 39 is held against shoulder 41 by the force exerted upon it by the fluid inside chamber 40; as the diameter of said chamber is greater than the diameter of chamber 36, the resultant of the forces acting on either side of piston 39 presses it against shoulder 41. In this configuration, rod 8 is held in a central position, which corresponds to position a of the control element.

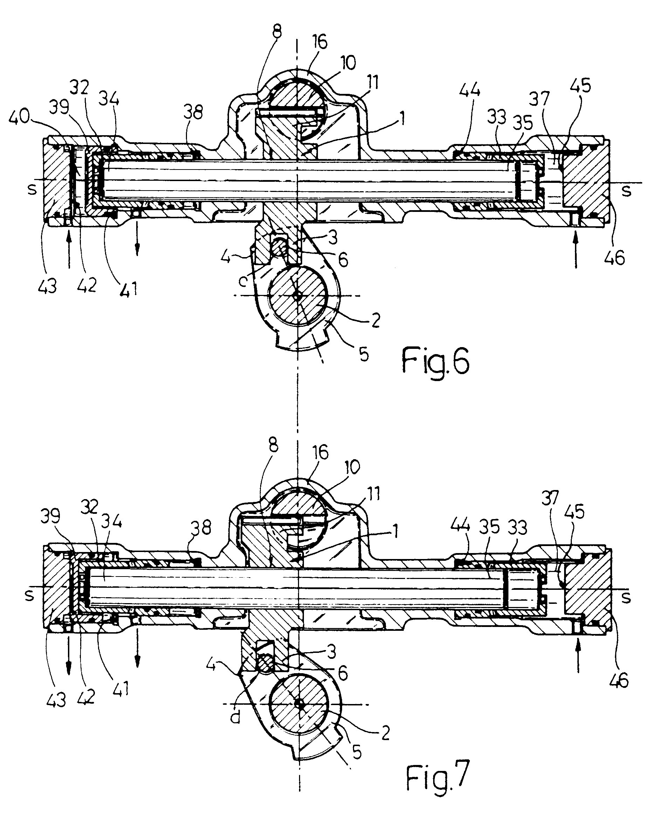

If fluid is discharged from chamber 37, the rod moves into the position shown in FIGURE 5, as piston 33 is pressed against shoulder 45 as a result of the force exerted on the surface of end 34 of said piston: in fact, the pressurized oil in chamber 36, through the borehole on the rear wall of the piston, can act on this surface. In this position, control element 1 assumes the position marked b in FIGURE 2.

If, with the configuration shown in FIGURE 4, the fluid in chamber 36 is discharged, the rod moves into the position shown in FIGURE 6, in which piston 33 is pressed against shoulder 44 and the pressurized hydraulic fluid in chamber 37 passes through the borehole in the back wall of piston 33 and acts on the front surface of end 35 of the rod; piston 32 is in contact with piston 39 held by the pressure of the fluid in chamber 40 against shoulder 41. This position corresponds to the configuration of the control element marked c in FIGURE 2.

If the fluid is discharged from both chambers 36 and 40, rod 8 moves into the configuration shown in FIGURE 7 with piston 39 resting on shoulder 42 and piston 32 resting on shoulder 41, due to the effect of the force exerted by the pressurized oil fully occupying chamber 37; from said chamber, flowing through the borehole on the rear wall of piston 33, the oil exerts a force on the front surface of end 35 of rod 8. The position shown in FIGURE 7 corresponds to the configuration of the control element marked d in FIGURE 2.

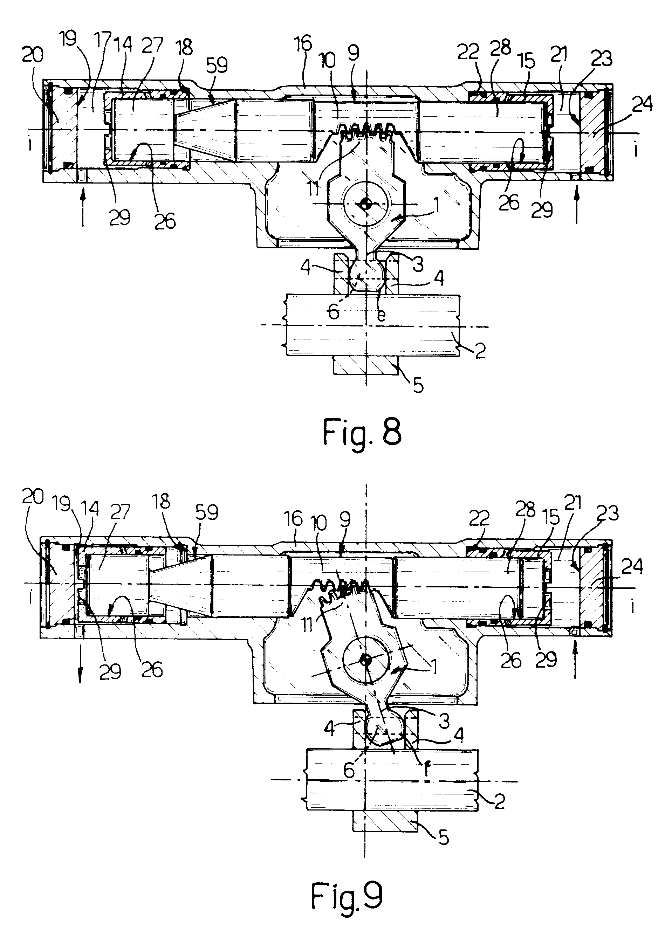

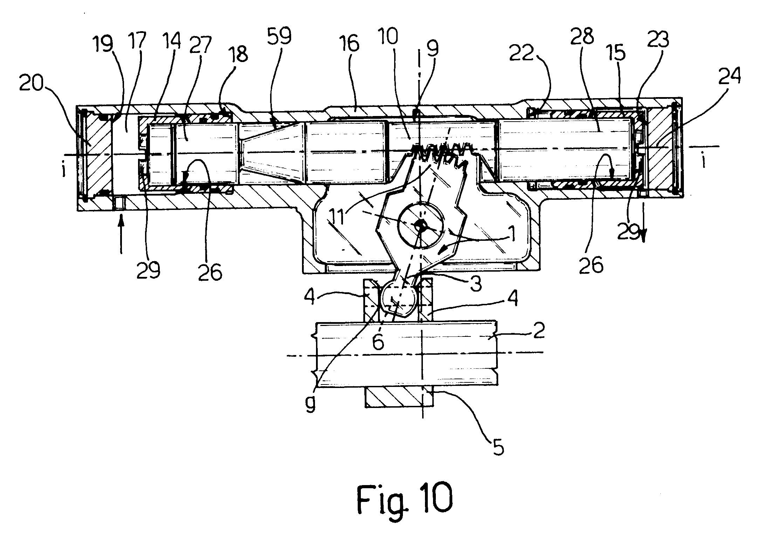

When a gear engaging operation is to be performed following a selection operation, performed as set forth above, valve means 50 and 54 are activated to supply pressurized hydraulic fluid to chambers 17 and 21 (FIGURE 3) or discharge it from them. If the fluid is supplied to both the chambers, rod 9 moves into the configuration shown in FIGURE 8 and is held in its central position by pistons 14 and 15 which rest on their respective shoulders 18 and 22. When the fluid in one of the chambers is discharged, rod 9 moves towards the chamber being discharged as a result of the force exerted on the other end of the rod by the oil flowing back through borehole 29 on the relative piston: the two positions corresponding to these conditions are shown in FIGURES 9 and 10.

Each of the three position of rod 9, shown in FIGURES 8, 9 and 10, correspond to angular positions of the control element marked, respectively, e, f, and g in FIGURE 3.

The movements of rods 8 and 9 may be driven, by means of the valve means set forth above, with variable forces which may be adapted to the actual movements made, according to a predetermined law; in this way, the gear selection and engaging operations may be performed with the force which is strictly necessary, on each occasion, to perform the operation, thus avoiding excessive stress on the gearbox components and, in particular, on the synchronizers. It is well known that the force required to perform these operations depends on the running and operating conditions of the vehicle and, therefore, for a correct operation, the drive forces must be gauged to said conditions.

Each rod moves with extreme precision into one of the positions and is held in the position reached by the pressure of the hydraulic fluid. Furthermore, the unit is extremely compact and is housed in a single body (body 16) containing all the unit components; it therefore occupies little space; the length of the pipes linking the valve means to the chambers of the unit through which pressurized oil is supplied is reduced to a minimum so there is little flow resistance and an immediate response to drive activation.

## Claims

1. A hydraulic actuator unit designed to control gear selection and engaging operations in a mechanical gearbox for motor vehicles, said unit comprising:
- a control element (1) adapted to assume four positions (a,b,c,d) along a first axis (S-S), each of said positions corresponding to the selection of a gear, and into three angular positions (e,f,g) along planes perpendicular to said axis, each of said angular positions corresponding to the engaging of a gear or the neutral position;
- a first bar (8) which moves along said first axis, rotates about it and to which said element is fixed;
- a second bar (9) which moves along a second axis (i-i) perpendicular to said first axis, said second bar being equipped with a section of a rack (10) and said control element being equipped with a gear wheel sector (11) which engages with said rack so as to drive, by translating said second bar along its respective axis, the rotation of said element on said planes;
- hydraulic thrust means for said first and second bars, in which a fluid exerts a force on both ends (27,28,34,35) of each bar so as to drive it along said two perpendicular axes;
characterized in that it comprises:
a first (14) and a second (15) piston, each of which has the form of a beaker having a bottom wall, is free to move along an axis between two shoulders (18,19 and 22,23) inside a chamber (17,21) in line with one end of the second bar (9) and has a first axial borehole (26) in which the corresponding end (27,28) of the second bar (9) is housed in a mobile and fluid-tight fashion and a second borehole (29) passing through said bottom wall;
a couple of shoulders, each of which is obtained by means of said bottom wall of said beaker and is adapted to halt a corresponding end of the second bar (9);
valve means (50,54) adapted to supply a pressurized fluid to each of the two chambers (17,21) and discharge it from them, so that when the fluid is supplied to both of the chambers, said bottom walls of the beaker are in contact with the corresponding pistons and said second bar (9) is set in a first central position and when said fluid is supplied to one of said chambers and discharged from the other, the end of a piston goes away from the bottom wall of the corresponding beaker, while the end of the other piston remains in contact with the bottom wall of the corresponding beaker and this goes in contact with one of said shoulders, moving said bar into one of the two lateral positions with respect to the central position;
- a third (32) and a fourth (33) piston, each of which has the form of a beaker having a bottom wall, is free to move along an axis between two shoulders (38,39 and 44,45) inside a chamber (36,37) in line with one end of the first bar (8), and has a first axial borehole in which the corresponding end of the bar (34,35) is housed in a mobile fluid-tight fashion and a second borehole passing through said bottom wall;
a couple of shoulders, each of which is obtained by means of the bottom wall of said beaker and is adapted to halt a corresponding end of the first bar (8);
a fifth piston (39) which has the form of a beaker and moves inside a third chamber (40) which is coaxial with said chambers (36) between two shoulders (41,42) and set so as to house one of said third (32) or fourth (33) piston and to create with its bottom wall one of said shoulders;
and valve means (50,54) adapted to supply a pressurized fluid to each of said chambers (36;37;40) and to discharge it from them.

2. A unit as claimed in claim 1 characterized in that each of said pistons (14,15,32,33 and 39) has a ring edge adapted to block it against one of said shoulders (18,22,38,44).

3. A unit as claimed in the previous claims, characterized in that said valve means (50,54) comprise a plurality of electrically driven valves, each of which is adapted to modulate, according to a predetermined law, the pressure of said fluid supplied to one of the chambers of said thrust means during the movement of said first and second bars.

4. A unit as claimed in any of claims 1 to 2, characterized in that said valve means (50,54) comprise electrically driven valves, each of which is adapted to modulate, according to a predetermined law, the flow of said fluid supplied to one of said chambers of said thrust means during the movement of said first and second bars.

5. A unit as claimed in the previous claims, characterized in that said chambers (17,21,36,37,40) are machined into a single body (16).

6. A unit as claimed in any of the previous claims, characterized in that said control element (1) comprises a hub (7) connected to said second bar (9), a couple of forks (3) projecting radially from said hub and adapted to interact with the elements of said gearbox (2,4), said gear wheel sector (11) projecting from said hub on the opposite side to that from which said forks project.

## Patentansprüche

1. Hydraulische Betätigungseinheit zur Steuerung der Gangwahl und der Eingriffsvorgänge in einem mechanischen Schaltgetriebe für Kraftfahrzeuge, mit:
- einem Steuerelement (1), das vier Positionen (a,b,c,d) entlang einer ersten Achse (S-S) einnehmen kann, welche Positionen der Auswahl eines Ganges entsprechen, und drei Winkelpositionen (e,f,g) entlang Ebenen senkrecht zu der Achse, welche Winkelpositionen dem Eingriff eines Ganges oder der Leerlaufstellung entsprechen,
- einer ersten Stange (8), die sich entlang der ersten Achse bewegt und um diese dreht und an der das Element befestigt ist,
- einer zweiten Stange (9), die sich entlang einer zweiten Achse (i-i) senkrecht zu der ersten Achse bewegt, welche zweite Stange mit einem Abschnitt einer Zahnstange (10) versehen ist und welches Steuerelement mit einem Zahnradsektor (11) versehen ist, der in die Zahnstange zum Drehen des Elements auf den Ebenen durch Verschiebung der zweiten Stange entlang ihrer Achse eingreift,
- einer hydraulischen Schubeinrichtung für die erste und zweite Stange, in der ein Fluid eine Kraft auf beide Enden (27,28,34,35) jeder Stange ausübt und sie entlang der beiden senkrechten Achsen verschiebt,
**gekennzeichnet** durch
- einen ersten und einen zweiten Kolben (14,15), die die Form eines Bechers mit einer Bodenwand aufweisen und sich frei entlang einer Achse zwischen zwei Schultern (18,19,22,23) innerhalb einer Kammer (17,21) in Reihe mit einem Ende der zweiten Stange (9) bewegen können und ein erstes axiales Bohrloch (26) aufweisen, in dem das entsprechende Ende (27,28) der zweiten Stange (9) in beweglicher und fluiddichter Art untergebracht ist, und ein zweites Bohrloch (29), das durch die Bodenwand verläuft,
- eine Anzahl von Schultern, die erhalten werden mit Hilfe der Bodenwand des Bechers und vorgesehen sind zum Halten eines entsprechenden Endes der zweiten Stange (9),
- eine Ventileinrichtung (50,54) zum Zuführen eines Druckfluids zu den beiden Kammern (17,21) und zum Ablassen aus diesen, derart, daß, wenn das Fluid den beiden Kammern zugeführt wird, die Bodenwände des Bechers in Berührung mit den entsprechenden Kolben sind und die zweite Stange (9) in eine erste zentrale Position gestellt wird, und wenn das Fluid einer der Kammern zugeführt und aus der anderen ausgelassen wird, das Ende eines Kolbens von der Bodenwand des entsprechenden Bechers entfernt wird, während das Ende des anderen Kolbens in Berührung mit der Bodenwand des entsprechenden Bechers bleibt und in Berührung geht mit einer der Schultern, die die Stange in eine der beiden seitlichen Positionen in bezug auf die zentrale Position bewegt,
- einen dritten (32) und vierten (33) Kolben, die jeweils die Form eines Bechers mit einer Bodenwand aufweisen, sich frei entlang einer Achse zwischen zwei Schultern (38,39,44,45) innerhalb einer Kammer (36,37) in Reihe mit einem Ende der ersten Stange (8) bewegen und ein erstes axiales Bohrloch aufweisen, in dem das entsprechende Ende der Stange (34,35) beweglich und fluiddicht untergebracht ist, und ein zweites Bohrloch, das durch die Bodenwand hindurchgeht,
- eine Anzahl von Schultern, die erhalten werden mit Hilfe der Bodenwand des Bechers und ausgebildet sind zum Halten eines entsprechenden Endes der ersten Stange (8),
- einen fünften Kolben (39), der die Form eines Bechers aufweist und sich im Inneren einer dritten Kammer (40) bewegt, die koaxial ist mit den Kammern (36), zwischen zwei Schultern (41,42), und so eingestellt ist, daß er einen der dritten (32) oder vierten (33) Kolben aufnimmt und mit der Bodenwand eine der Schultern bildet,
- eine Ventileinrichtung (50,54) zum Zuführen eines Druckfluids zu jeder der Kammern (36,37,40) und zur Abgabe des Druckfluids aus den Kammern.

2. Einheit nach Anspruch 1, dadurch **gekennzeichnet**, daß jeder der Kolben (14,15,32,33,39) eine Ringkante aufweist, die den Kolben gegenüber einer der Schultern (18,22,38,44) blockiert.

3. Einheit nach den vorhergehenden Ansprüchen, dadurch **gekennzeichnet**, daß die Ventileinrichtung (50,54) eine Anzahl von elektrisch angetriebenen Ventilen umfaßt, die gegenüber einem vorgegebenen Gesetz den Druck des einer der Kammern der Schubeinrichtung während der Bewegung der ersten und zweiten Stange zugeführten Fluids moduliert.

4. Einheit nach einem der Ansprüche 1 bis 2, dadurch **gekennzeichnet**, daß die Ventileinrichtung (50,54) elektrisch betriebene Ventile (50,54) umfassen, deren jedes vorgesehen ist, den Fluß des einer der Kammern der Schubeinrichtung während der Bewegung der ersten und zweiten Stangen zugeführten Fluids nach einem vorgegebenen Gesetz zu modulieren.

5. Einheit nach den vorhergehenden Ansprüche, dadurch **gekennzeichnet**, daß die Kammern (17,21,36,37,40) in einen einzelnen Körper (16) eingearbeitet sind.

6. Einheit nach einem der vorhergehenden Ansprüche, dadurch **gekennzeichnet**, daß das Steuerelement (1) eine Nabe (7) umfaßt, die mit der zweiten Stange (9) verbunden ist, eine Anzahl von Gabeln (3), die radial von der Nabe vorspringen und vorgesehen sind zum Zusammenwirken mit den Elementen des Schaltgetriebes (2,4), welcher Zahnradsektor (11) von der Nabe auf der Seite gegenüber derjenigen der Gabeln vorspringt.

## Revendications

1. Unité hydraulique de commande destinée à la commande des opérations de sélection et d'enclenchement des rapports dans une boîte de vitesse mécanique pour véhicules à moteur, ladite unité comprenant:
- un élément de commande (1) adapté pour prendre quatre positions (a, b, c, d) le long d'un premier axe (S-S), chacune desdites positions correspondant à la sélection d'un rapport, et dans trois positions angulaires (e, f, g) le long de plans perpendiculaires audit axe, chacune desdites positions angulaires correspondant à l'engagement d'un rapport ou au point mort;
- une première barre (8) qui se déplace le long dudit premier axe, tourne autour de lui et sur lequel ledit élément est fixé;
- une seconde barre (9) qui se déplace le long d'un second axe (i-i), perpendiculaire audit premier axe, ladite seconde barre étant équipée d'une section de crémaillère (10) et ledit élément de commande étant équipé d'un secteur denté (11) qui vient en prise avec ladite crémaillère de manière à entraîner, par translation de ladite seconde barre le long de son axe respectif, la rotation dudit élément sur lesdits plans;
- des moyens de poussée hydraulique pour lesdites première et seconde barres, dans lesquels un fluide exerce une force sur les deux extrémités (27, 28, 34, 35) de chaque barre pour l'entraîner le long desdits deux axes perpendiculaires; caractérisés en ce qu'ils comprennent:
un premier (14) et un second (15) pistons, chacun d'eux étant en forme de cuvette, comprenant une paroi de fond et se déplaçant librement le long d'un axe entre deux épaulements (18, 19 et 22, 23) à l'intérieur d'une chambre (17, 21) dans l'alignement d'une extrémité de la seconde barre (9) et comprenant un premier alésage axial (26) dans lequel l'extrémité correspondante (27, 28) de la seconde barre (9) est montée de façon mobile et étanche aux fluides, et un second alésage (29) traversant ladite paroi de fond;
une paire d'épaulements, chacun d'eux étant constitué au moyen de ladite paroi de fond de ladite cuvette et étant adapté pour retenir une extrémité correspondante de ladite seconde barre (9);
des moyens en forme de soupape (50, 54) adaptés pour fournir un fluide sous pression vers chacune des deux chambres (17, 21) et le refouler de celles-ci, de manière que lorsque le fluide est fourni aux deux chambres, lesdites parois de fond de la coupelle sont en contact avec les pistons correspondants et ladite seconde barre (9) est réglée dans une première position centrale et, lorsque ledit fluide est fourni à l'une desdites chambres et refoulé de l'autre, l'extrémité d'un piston sort de la paroi de fond de la cuvette correspondante, tandis que l'extrémité de l'autre piston reste en contact avec la paroi de fond de la cuvette correspondante et celle-ci vient en contact avec l'un desdits épaulements, en déplaçant ladite barre dans l'une des deux positions latérales par rapport à la position centrale;
- un troisième (32) et un quatrième (33) pistons, chacun d'eux étant en forme de cuvette, comprenant une paroi de fond se déplaçant librement le long d'un axe entre deux épaulements (38, 39 et 44, 45) à l'intérieur d'une chambre (36, 37) dans l'alignement d'une extrémité de la première barre (8), et comportant un premier alésage axial dans lequel l'extrémité correspondante de la barre (34, 35) est logée de façon mobile, étanche aux fluides, et un second alésage traversant ladite paroi de fond;
une paire d'épaulements, chacun d'eux étant formé au moyen de la paroi de fond de ladite cuvette et étant adapté pour retenir une extrémité correspondante de la première barre (8);
un cinquième piston (39) en forme de cuvette et se déplaçant à l'intérieur d'une troisième chambre (40) coaxiale auxdites chambres (36), entre deux épaulements (41, 42) et réglé de manière à recevoir l'un desdits troisième (32) ou quatrième (33) pistons et à créer avec sa paroi de fond l'un desdits épaulement;
et lesdits moyens en forme de soupape (50, 54) étant adaptés pour fournir un fluide sous pression vers chacune desdites chambres (36; 37; 40) et à le refouler de celles-ci.

2. Une unité selon la revendication 1, caractérisée en ce que chacun desdits pistons (14, 15, 32, 33 et 39) a un bord annulaire adapté pour le bloquer contre l'un desdits épaulements (18, 22, 38, 44).

3. Une unité selon l'une quelconque des précédentes revendications, caractérisée en ce que lesdits moyens en forme de soupape (50, 54) comprennent une pluralité de soupapes commandées électriquement, chacune d'elles étant agencée pour moduler, en fonction d'une loi prédéterminée, la pression dudit fluide fourni vers l'une des chambres desdits moyens de poussée pendant le déplacement desdites première et seconde barres.

4. Une unité selon l'une quelconque des revendications 1 à 2, caractérisée en ce que lesdits moyens en forme de soupape (50, 54) comprennent des soupapes commandées életriquement, chacune d'elles étant adaptée pour moduler, en fonction d'une loi prédéterminée, l'écoulement dudit fluide fourni à l'une desdites chambres desdits moyens de poussée pendant le déplacement desdites première et seconde barres.

5. Une unité selon les précédentes revendications, caractérisée en ce que lesdites chambres (17, 21, 36, 37, 40) sont usinées dans un seul corps (16).

6. Une unité selon l'une quelconque des précédentes revendications, caractérisée en ce que ledit élément de commande (1) comprend un moyeu (7) relié à ladite seconde barre (9), une paire de fourchettes (3) dirigées radialement en saillie à partir dudit moyeu et agencées pour agir solidairement avec les éléments de ladite boîte de vitesse (2, 4), ledit secteur denté (11) étant disposé en saillie à partir dudit moyeu sur le cité opposé à celui à partir duquel lesdites fourchettes sont en saillie.
